# EUROPEAN PATENT APPLICATION

(11) **EP 4 325 793 A1**
(43) Date of publication of application: **21.02.2024**
(21) Application number: 22190733.0
(22) Date of filing: 17.08.2022
(51) Int. Cl.: H04L 41/0823, H04L 41/40, H04W 24/02

(54) **COMMUNICATION SYSTEM AND METHOD FOR PROVIDING A VIRTUAL NETWORK FUNCTION**

(71) Applicant: NTT DOCOMO, INC., Chiyoda-Ku Tokyo 100-6150 (JP)
(72) Inventor: KATSALIS, Kostas, 80687 Munich (DE); TRIAY MARQUES, Joan, 80687 Munich (DE); KUNO, Yuya, Tokyo, 100-6150 (JP)
(74) Representative: Viering, Jentschura & Partner mbB Patent- und Rechtsanwälte

(57) **Abstract**

According to one embodiment, a communication system is described comprising a network function virtualization orchestration system configured to provide a virtual network function for an application for a communication network and a virtual network function sharing management component configured to establish a sharing profile of the virtual network function, wherein the sharing profile specifies whether the virtual network function may be shared with another communication network. The network function virtualization orchestration system is configured to, upon a request from the other communication network for provision of a virtual network function, fulfil the request from the other communication network by sharing the provided virtual network function with the other communication network if the sharing profile specifies that the virtual network function may be shared with the other communication network.

## Description

The present disclosure relates to communication systems and methods for providing a virtual network function.

Network functions of 5G core networks and 5G RAN but also other network functions like firewalls may be implemented as virtual network functions, i.e. operating in virtual machines and/or containers running on top off-the-shelf servers rather than specialized telecommunication hardware. This increases the flexibility regarding resource provisioning used by the network functions and ability to perform resource allocation to cope with dynamic load increase. Still, approaches are desirable which allow an efficient use of the available computational resources, in particular in case of complex network architectures including multiple interconnected communication networks and/or communication networks divided into a plurality of network slices.

According to one embodiment, a communication system is provided including a network function virtualization orchestration system configured to provide a virtual network function for a communication network and a virtual network function sharing management component configured to establish a sharing profile of the virtual network function, wherein the sharing profile specifies whether the virtual network function may be shared with another communication network.

The network function virtualization orchestration system is configured to, upon a request from the other communication network for provision of a virtual network function, fulfil the request from the other communication network by sharing the provided virtual network function with the other communication network if the sharing profile specifies that the virtual network function may be shared with the other communication network.

The drawings are not necessarily able to represent scaling, emphasis instead generally being placed upon illustrating the principles of the invention.

In the following description, various aspects are described with reference to the following drawings, in which:
- Figure 1: shows a mobile radio communication system.
- Figure 2: shows an architecture including a Network Functions Virtualisation Management and Orchestration (NFV-MANO) Architectural Framework.
- Figure 3: illustrates a VNF sharing scenario where a NS (Network Service) is shared between two different tenants.
- Figure 4: illustrates a sharing scenario where two network services are shared between two network slices subnets.
- Figure 5: illustrates network slicing in 3GPP from a management perspective.
- Figure 6: illustrates slice management from a 3GPP perspective.
- Figure 7: illustrates the addition of a VNF sharing manager to VNF generic OAM (Operation, Administration and Maintenance) functions according to an embodiment.
- Figure 8: shows a flow diagram illustrating the transformation of a (non-shared) VNF into a shared VNF by a VNF sharing manager.
- Figure 9: illustrates states of a VNF controlled by the VNF sharing manager.
- Figure 10: illustrates the use of virtual network slices.
- Figure 11: shows a flow diagram for the configuration of a shared VNF.
- Figure 12: shows a flow diagram illustrating a workflow where an NSSMF (Network Slice Subnet Management Function) requests a shareable VNF.
- Figure 13: shows a communication system according to an embodiment.
- Figure 14: shows a flow diagram illustrating a method for providing a network function.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication system including a network function virtualization orchestration system configured to provide a virtual network function for an application for a communication network; and a virtual network function sharing management component configured to establish a sharing profile of the virtual network function, wherein the sharing profile specifies whether the virtual network function may be shared with another communication network; wherein the network function virtualization orchestration system is configured to, upon a request from the other communication network for provision of a virtual network function, fulfil the request by sharing the provided virtual network function with the other communication network if the sharing profile specifies that the virtual network function may be shared with the other communication network.
Example 2 is the communication system of Example 1, wherein the network function virtualization orchestration system is configured to receive the request from the other communication network and is configured to, upon reception of the request, request the virtual network function sharing management component to check whether the sharing profile specifies that the virtual network function may be shared with the other communication network.
Example 3 is the communication system of Example 1 or 2, wherein the communication system includes a plurality of network slices and wherein the virtual network function sharing management component is configured to share the virtual network function between the communication network and the other communication network by treating the other communication network as a virtual network slice and sharing the virtual network function among the virtual network slice and one or more of the plurality of network slices.
Example 4 is the communication system of Example 3, wherein the virtual network function sharing management component is configured to maintain an abstract representation of the virtual network function for each network slice and virtual network slice between which the virtual network function is shared.
Example 5 is the communication system of any one of Examples 1 to 4, wherein the network function virtualization orchestration system is configured to, if the sharing profile specifies that the virtual network function may be shared with the other communication network, delegate life cycle management and/or configuration management of the virtual network function to the virtual network function sharing management component.
Example 6 is the communication system of any one of Examples 1 to 5, wherein the virtual network function sharing management component is configured to, if the sharing profile specifies that the virtual network function may be shared with the other communication network, configure the virtual network function according to the requirements for the usage of the virtual network function received from the communication network and from the other communication network.
Example 7 is the communication system of any one of Examples 1 to 6, wherein the network function virtualization orchestration system is configured to create the virtual network function in response to a request for provision of a virtual network function from the communication network.
Example 8 is the communication system of any one of Examples 1 to 7, wherein the sharing profile specifies whether virtual network function may be shared with any other communication network.
Example 9 is the communication system of any one of Examples 1 to 8, wherein the request from the other communication network for provision of a virtual network function for the same application as for the communication network.
Example 10 is the communication system of any one of Examples 1 to 9, wherein the application is a network function of a core network of a mobile communication network.
Example 11 is the communication system of any one of Examples 1 to 10, wherein the virtual network function sharing management component is configured to manage the sharing status of the virtual network function by a state machine.
Example 12 is the communication system of any one of Examples 1 to 11, wherein the virtual network function sharing management component is configured to transition between the virtual network function being shareable with the other communication network and the virtual network function not being shareable with the other communication network during operation of the virtual network function.
Example 13 is a method for providing a virtual network function includingproviding a virtual network function for an application for a communication network, establishing a sharing profile of the virtual network function, wherein the sharing profile specifies whether the virtual network function may be shared with another communication network and, upon a request from the other communication network for provision of a virtual network function, fulfilling the request from the other communication network by sharing the provided virtual network function with the other communication network if the sharing profile specifies that the virtual network function may be shared with the other communication network.

It should be noted that one or more of the features of any of the examples above may be combined with any one of the other examples. In particular, the examples described in context of the device are analogously valid for the method.

According to further embodiments, a computer program and a computer readable medium including instructions, which, when executed by a computer, make the computer perform the method of any one of the above examples are provided.

In the following, various examples will be described in more detail.

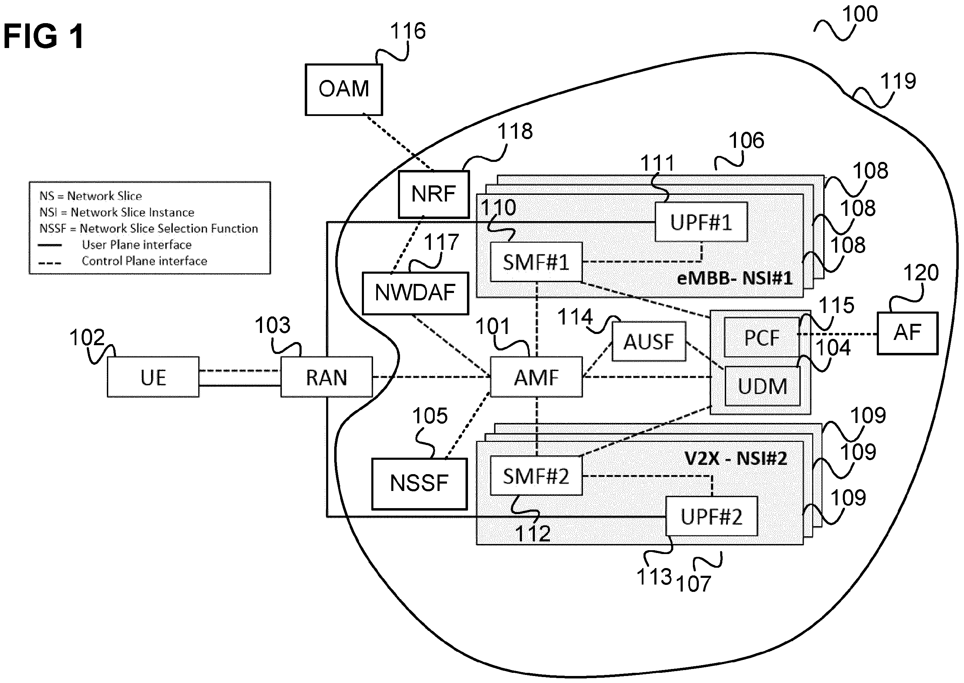

Figure 1 shows a mobile radio communication system 100, for example configured according to 5G (Fifth Generation) as specified by 3GPP (Third Generation Partnership Project) in simplified form.

The mobile radio communication system 100 includes a mobile radio terminal device 102 such as a UE (user equipment), and the like. The mobile radio terminal device 102, also referred to as subscriber terminal, forms the terminal side while the other components of the mobile radio communication system 100 described in the following are part of the mobile communication network side, i.e. part of a mobile communication network (e.g. a Public Land Mobile Network PLMN).

Furthermore, the mobile radio communication system 100 includes a Radio Access Network (RAN) 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard (e.g. non-3GPP accesses like WiFi) but 5G is herein used as an example. Each radio access network node may provide a radio communication with the mobile radio terminal device 102 over an air interface. It should be noted that the radio access network 103 may include any number of radio access network nodes.

The mobile radio communication system 100 further includes a core network (5GC) 119 including an Access and Mobility Management Function (AMF) 101 connected to the RAN 103, a Unified Data Management (UDM) 104 and a Network Slice Selection Function (NSSF) 105. Here and in the following examples, the UDM may further consist of the actual UE's subscription database, which is known as, for example, the UDR (Unified Data Repository). The core network 119 further includes an AUSF (Authentication Server Function) 114, a PCF (Policy Control Function) 115 and an AF (application function) 120.

The core network 119 may have multiple core network slices 106, 107 and for each core network slice 106, 107, the operator (also referred to MNO for Mobile Network Operator) may create multiple core network slice instances 108, 109. For example, the core network 119 includes a first core network slice 106 with three core network slice instances 108 for providing Enhanced Mobile Broadband (eMBB) and a second core network slice 107 with three core network slice instances (CNIs) 109 for providing Vehicle-to-Everything (V2X).

Typically, when a core network slice is deployed (i.e. created), network functions (NFs) are instantiated, or (if already instantiated) referenced to form a core network slice instance and network functions that belong to a core network slice instance are configured with a core network slice instance identification.

Specifically, in the shown example, each instance 108 of the first core network slice 106 includes a first Session Management Function (SMF) 110 and a first User Plane Function (UPF) 111 and each instance 109 of the second core network slice 107 includes a second Session Management Function (SMF) 112 and a second User Plane Function (UPF) 113. The SMFs 110, 112 are for handling PDU (Protocol Data Unit) sessions, i.e. for creating, updating and removing PDU sessions and managing session context with the User Plane Function (UPF).

The RAN 103 and the core network 119 form the network side of the mobile radio communication system, or, in other words, form the mobile radio communication network. The mobile radio communication network and the mobile terminals accessing the mobile radio communication network form, together, the mobile radio communication system.

Like the core network 119, the RAN 103 may also be sliced, i.e. include multiple RAN slices. A RAN slice and a core network slice 106, 107 may be grouped to form a network slice.

In the following, "network slice" (or just "slice") generally refers to a core network slice but may also include a RAN slice or even a Transport network slice.

An S-NSSAI (Single Network Slice Selection Assistance information) identifies a network slice and consists of:
- A Slice/Service type (SST), which refers to the expected Network Slice behaviour in terms of features and services;
- A Slice Differentiator (SD) which is optional information that complements the slice/service type(s) to differentiate amongst multiple network slices of the same slice/service type.

A network slice instance (NSI) is identified by an NSI ID.

NSSAI may include one or more S-NSSAIs.

Allowed NSSAI is NSSAI provided by the serving PLMN (Public Land Mobile Network) during e.g. a registration procedure, indicating the S-NSSAI values allowed by the network for a UE in the serving PLMN for the current registration area.

Configured NSSAI is NSSAI that has been provisioned in the UE. It may be applicable to one or more PLMNs.

Requested NSSAI is NSSAI that the UE provides to the network during registration in order to establish a PDU session to the requested network slice.

The mobile radio communication system 100 may further include an OAM (Operation, Administration and Maintenance) function (or entity) 116, e.g. implemented by one or more OAM servers which is connected to the RAN 103 and the core network 119 (connections are not shown for simplicity). The OAM 116 may include an MDAS (Management Data Analytics Service). The MDAS may for example provide an analytics report regarding network slice instance load. Various factors may impact the network slice instance load, e.g. number of UEs accessing the network, number of QoS flows, the resource utilizations of different NFs which are related with the network slice instance.

Further, the core network 118 includes an NRF (Network Repository Function).

The core network 119 may further include a Network Data Analytics Function (NWDAF) 117. The NWDAF is responsible for providing network analytics and/or prediction information upon request from network functions.

The various network functions can be implemented on specialized hardware, i.e. on so-called ACTA (Advanced Telecommunications Computing Architecture) devices. This means that the network functions are implemented as physical network functions deployed on special hardware. The software for implementing the network function is strongly coupled with the hardware.

However, it may be desirable to implement network functions also on non-specialized hardware, i.e. as software applications running on virtual machines (and/or a container) deployed over COTS (Commercial off-the-shelf) servers (i.e. on general purpose or open computing platforms, i.e. devices). This is enabled by using virtualization technology (e.g., hypervisor, operating system (OS) containers etc.) network functions (e.g., SMF, PCF etc.) can be deployed in virtual machines (VMs) and/or containers. They are then referred to as virtual network functions (VNFs).

Management and orchestration (MANO) is a key element of the ETSI (European Telecommunications Standards Institute) network functions virtualization (NFV) architecture. MANO is an architectural framework that coordinates network resources for cloud-based applications and the lifecycle management of virtual network functions (VNFs) and network services. As such, it is crucial for ensuring rapid, reliable NFV deployments at scale. MANO includes several Functional Blocks and functions like the NFV orchestrator (NFVO), the VNF manager (VNFM), and the virtual infrastructure manager (VIM).

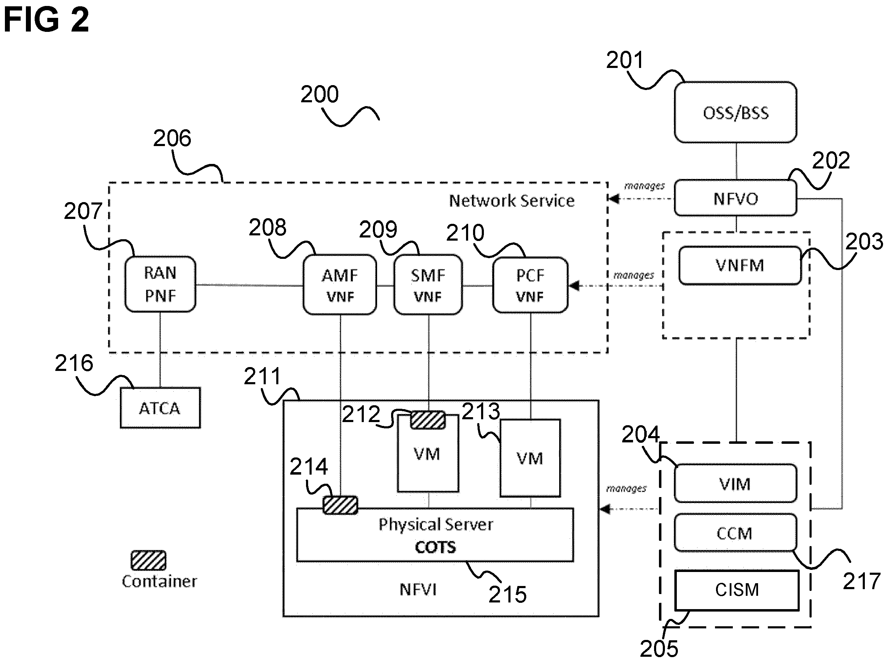

Figure 2 shows an architecture 200 including a simplified version of the Network Functions Virtualisation Management and Orchestration (NFV-MANO) Architectural Framework. It includes a collection of functional blocks and functions, data repositories used by these functional blocks, and reference points and interfaces through which these functional blocks exchange information for the purpose of managing and orchestrating NFV.

The architecture 200 includes an OSS/BSS(operations support system and business support system) 201, and an NFV-MANO including an NFVO 202, an VNFM 203, a VIM 204, a CISM (container Infrastructure Service Management) 205 and a CCM (CIS Cluster Management) 217.

The NFVO 202 manages a network service (NS) 206 which, in this example, includes the following virtualized functions: an AMF 208, an SMF 209 and a PCF 210 and a RAN component 207. A network service (NS) is a composition of physical and virtual network function(s) and/or service(s), defined by its functional and behavioural specification.

The architecture 200 further includes an NFVI 211 which includes hardware and software components that build up the virtualized environment in which VNFs are deployed.

In this example, the AMF 208, the SMF 209 and the PCF 210 are implemented as VNFs, i.e. as NFs that can be deployed on the NFVI 211. The SMF 209 is implemented by a container 212 running in a virtual machine, the PCF 210 on a virtual machine 213 and the AMF 208 in a container 214, all running on a COTS server 215. The RAN component 207 is, in contrast, is implemented on an ATCA device 216, i.e. is a physical network function.

The NFVO 202 manages the NS lifecycle and coordinates the management of NS lifecycle, VNF lifecycle is supported by the VNFM 203 and NFVI resources management supported by the VIM 204, CISM 205 and CCM 217 to ensure an optimized allocation of the necessary resources and connectivity.

The VNFM 203 is responsible for the lifecycle management of VNFs independently on whether the VNF is deployed over VM or containers.

The VIM 204 is responsible for controlling and managing the NFVI compute, storage and network resources, typically within one operator's infrastructure domain. The CISM 205 is responsible for orchestrating and managing the container infrastructure services and the containerized workloads instantiated on them. The CCM 217 is responsible for the management of container clusters.

It should be noted that regarding network functionality 3GPP is responsible for the management and configuration of the Network Functions (NFs) and interactions between NFs while it is not responsible for the management of the virtual network function aspects. In fact, the 3GPP functionality remains the same from an application perspective irrespective of whether a network function is virtualized or not. From ETSI NFV perspective, the NFV-MANO handles the orchestration and management of the both virtualized resources and the deployed VNF while remaining agnostic to the actual VNF application (e.g., if the VNF application is a virtualized PCF or a virtualized SMF) .

Regarding VNF management, VNF instantiation but also life cycle management (LCM) operations such as, update, scaling etc. are made by NFV-MANO (NFVO/VNFM/CISM/VIM) and the VNF configuration can be made by an element manager through interaction with the OSS.

A VNF can be part of multiple network services and a network service can be shared between multiple network slices (or network slice subnets) according to 3GPP and NFV-MANO. Further, even without considering 3GPP network slicing, multi-tenancy is possible, i.e. an NFV environment can be shared between multiple tenants (in the sense of multi-tenancy) and a service provider can offer NFV to tenants. Multiple users consume services from the same NFV-MANO or dedicated NFV-MANOs. Different sharing scenarios can be realized even without referring to the network slicing mechanism defined by 3GPP and correlation between the shared resources with specific network slice descriptors (NSDs) or identifiers (e.g., NSI-IDs).

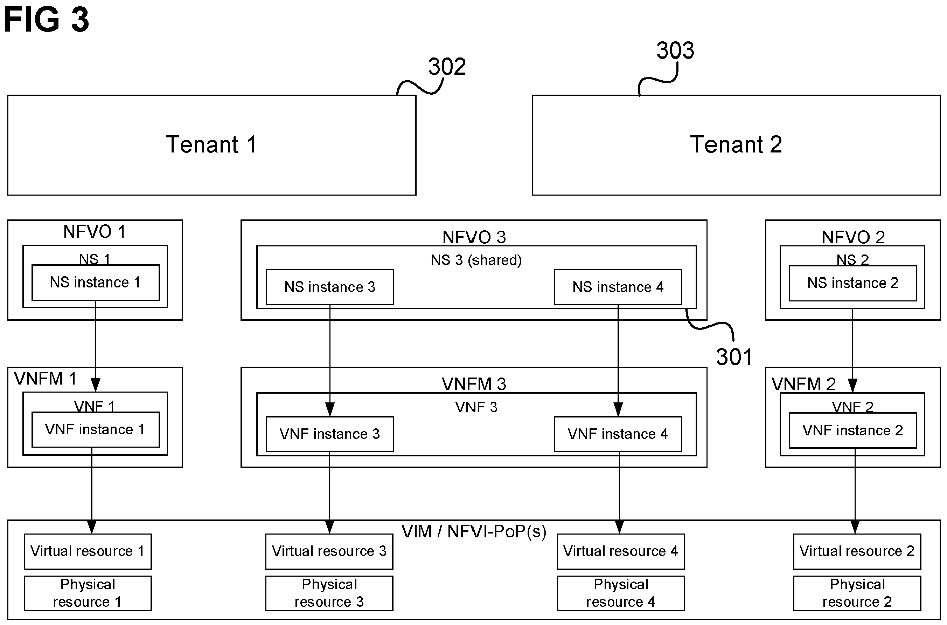

Figure 3 illustrates a sharing scenario where, in particular, a Network Service 301 is shared between two tenants 302, 303. The different VNFs which are parts of the shared Network Service are also shared between the different tenants 302, 303.

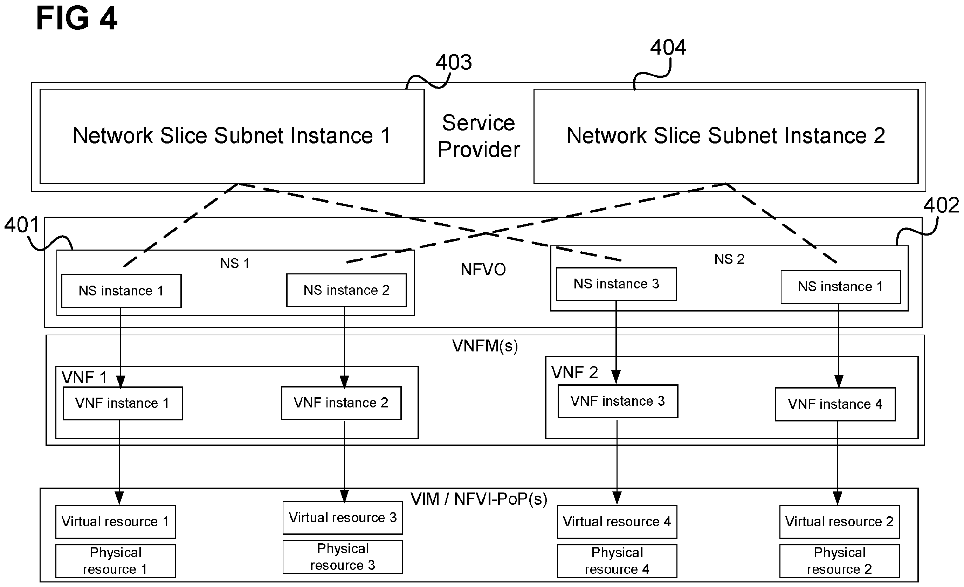

Figure 4 illustrates a sharing scenario where two network services 401, 402 are shared between two network slices subnet instances 403, 404.

Regarding the touch points between 3GPP's network slicing management model and the ETSI NFV management model one or more network slice subnet instances are mapped to one or more shared network services.

There are various options regarding the deployment of network slices using NFV Network Services (NSs):
- Multiple NS as deployment unit for one network slice instance with NFV provided connectivity.
- Multiple NS as deployment unit for one network slice instance without NFV provided connectivity for inter network slice subnet
- A single NS as deployment unit for one network slice instance
- Management of network slice instance transport network connectivity with multi-site connectivity services.

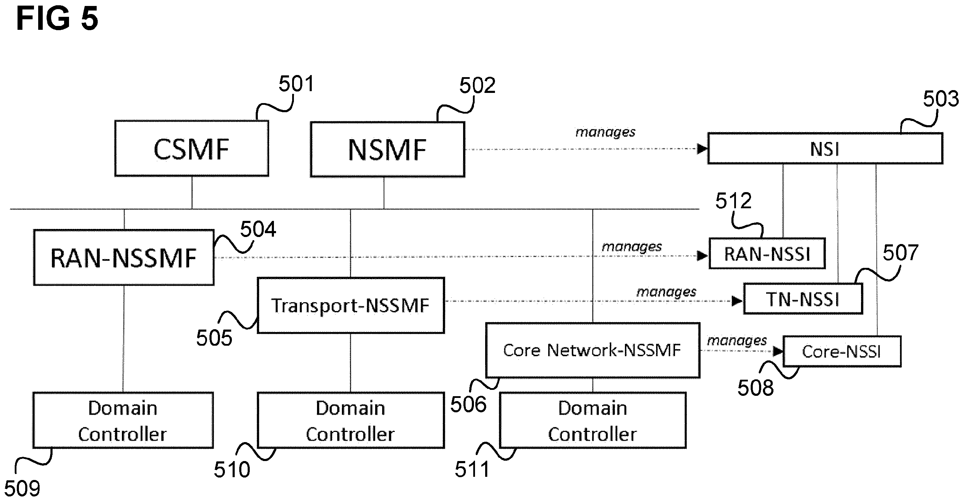

Figure 5 illustrates network slicing in 3GPP from a management perspective.

A Communication Service Management Function (CSMF) 501 is responsible for translating the communication service requirements to network slice requirements.

A Slice Management Function (NSMF) 502 serves for the end-to-end management and orchestration of an NSI (network slice instance) 503, i.e. a realization of a network slice.

Network Slice Subnet Management Functions (NSSMFs) 504, 505, 506 are responsible for the management and orchestration of the sub-network slice instance 503 in a specific domain. For example, a Transport Network Slice Subnet Instance (TN-NSSI) 507 is a realization of the network slice on transport domain and a Core-NSSI 508 is realization of the network slice on the core domain. An NSI 503 is a composition of multiple NSSIs 507, 508, 512.

The NSSMFs 504, 505, 506 are connected to respective domain controllers 509, 510, 511.

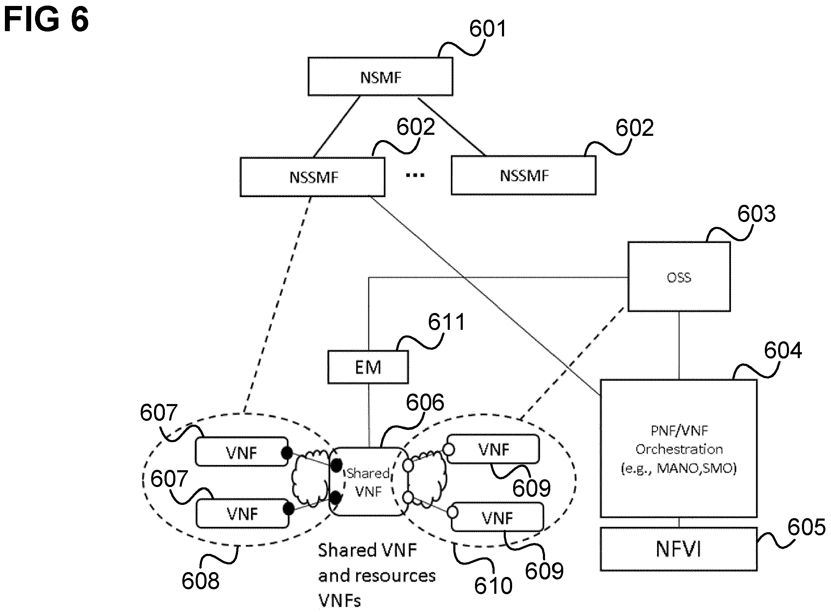

Figure 6 illustrates slice management from a 3GPP perspective.

As described with reference to figure 5, there is an NSMF 601 and multiple NSSMFs 602. Further, as described above, there is an OSS 603 and an orchestration system (e.g. NFV-MANO) 604 managing VNFs and NFVI 605.

In the example of figure 6, the OSS 603 can configure application aspects of a shared VNF 606 via an element manager (EM) 611 following normal procedures. VNFs 607 belonging to a first communication network 608 (e.g. a first tenant) and VNFs 609 belonging to a second communication network 610 are also connected to the shared VNF 606.

From the NFV-MANO 604 point of view, there is no entity which is managing the mapping of VNFs and PNFs and other communication resources to NSSIs (Network Slice Subnet Instances), i.e. the NFV-MANO is slice unaware.

According to various embodiments, an approach is described that allows two networks 608, 610 (608 may be 3GPP slice aware and 610 may belong to a tenant but is slice unaware) to share the same VNF 606 and to configure independently the allowed parameters. This covers generic VNF sharing concepts while also able to provide support for network slicing. It keeps the mappings of NSSIs to network services and VNFs/PNFs. It can be used to apply filters and expose slice specific information from VNF generic OAM functions to NFV-MANO (or OSS etc.).

Specifically, according to various embodiments, an entity denoted as VNF sharing manager is included in the VNF generic OAM functions framework. It provides the following functionalities:
- The VNF sharing manager may transform a non-shareable (normal VNF) to a shareable VNF and vice versa (without interrupting the operation of the VNF).
- It can be used to manage pre-provisioning aspects but also VNF configuration and management without continuous interaction with NFV-MANO (e.g. VNFM).
- It interacts with other VNF generic OAM functions and uses their services.
- It manages multi-tenancy of shared VNFs. A shared VNF can be used by network slices but also other tenants in a general way.
- Multi-tenancy can be enabled even without considering strict network slicing associations as defined by 3GPP. Multi-tenancy can be enabled considering both Network slicing-based requirements and also operational requirements by other systems (e.g., non-3GPP).
- It enables management and control of a shareable VNFs from 3GPP slice aware management systems and non 3GPP management systems using virtual network slices.
- It applies slicing on the VNF level and preserves isolation of operations between different tenants.
- It controls VNF policies enforcement on per tenant/slice basis.
- It enables VNF configuration automation on per tenant/slice basis considering also the VNF application, the allocated virtualized resources but also physical resources.
- The VNF sharing manager can execute partially VNFM related operations regarding VNF LCM, after negotiation with MANO (VNFM).
- It keeps the appropriate mappings between network slice instance and/or between network slice subnet instance identifiers passed from other management entities (like NSSMF) and MANO resources/VNFs and mappings between identifiers from other non-3GPP management systems and MANO resources/VNFs.
- Besides 3GPP slice management systems it interacts with other orchestration and management systems as well (e.g. SMO for the case of O-RAN or industrial management system)
- It automates, by interacting with other VNF generic OAM functions, the_VNF configuration and management, without interaction with VNFM.

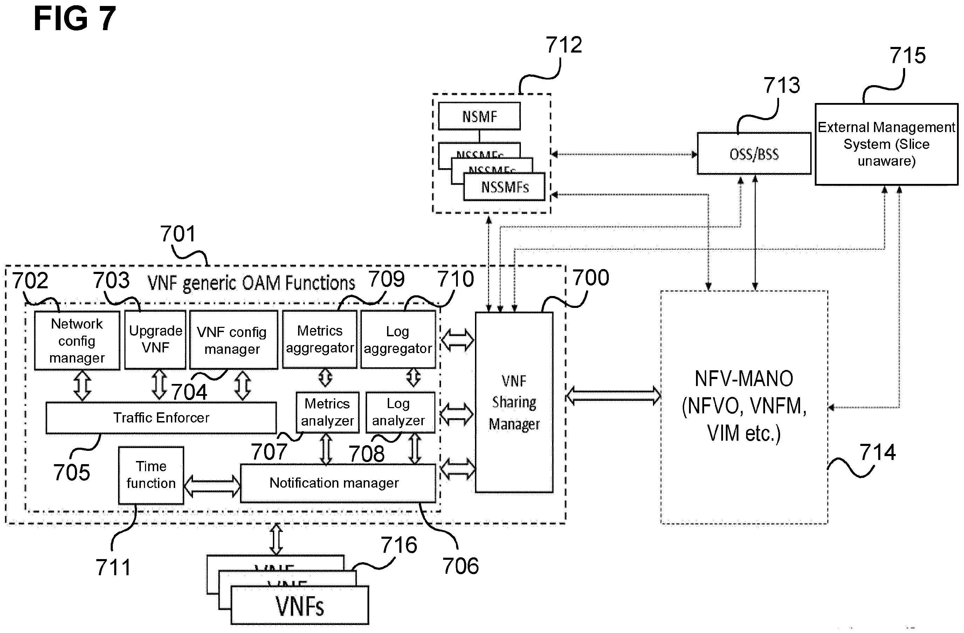

Figure 7 illustrates the addition of a VNF sharing manager 700 to VNF generic OAM functions 701 according to an embodiment.

The VNF generic OAM functions 701 provide functionality in a unified manner, easing the management of the different types of VNFs from an operator's point of view and simplifying the design of the individual VNFs. VNF generic OAM functions can interact with NFV-MANO, OSS/BSS, VNF/VNFCs, NFVI/hosts and other VNF generic OAM functions.

Examples of VNF generic OAM functions 701 are a network configuration manager 702, an VNF upgrade function 703 a VNF configuration manager 704, and a traffic enforcer 705.

The VNF sharing manager 700 can be also connected to 3GPP slice management 712 including an NSMF and NSSMFs as described with reference to figure 6, an OSS/BSS 713 (e.g. corresponding to OSS 603) and NFV-MANO entities 714 as described with reference to figure 2. Further, the VNF sharing manager 700 can be connected to an external management system 715 which is assumed to be slice unaware.

The VNF generic OAM functions 701 are connected to VNFs/VNFCs 716.

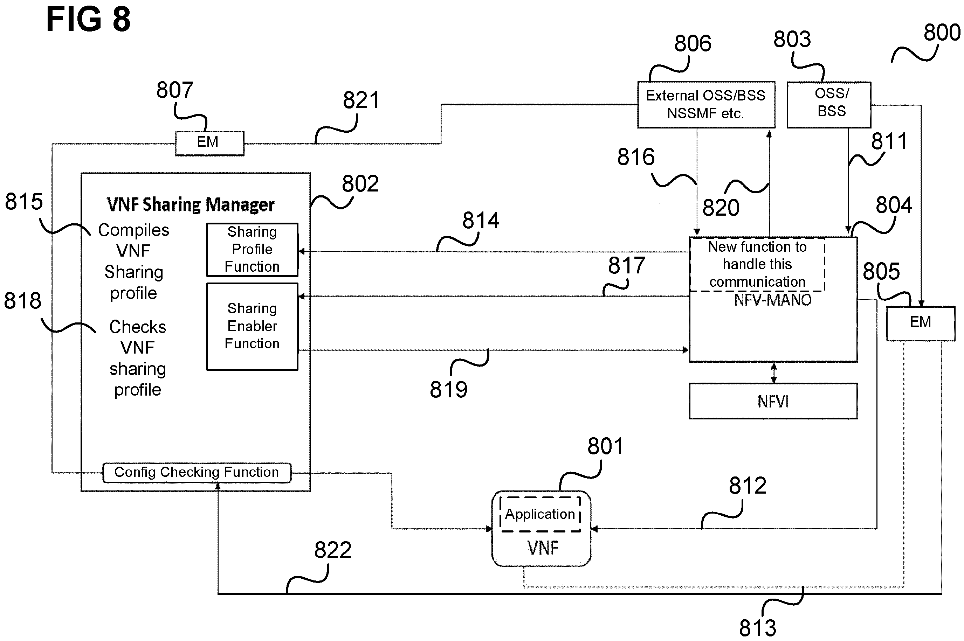

Figure 8 shows a flow diagram 800 illustrating the transformation of a (non-shared) VNF 801 (corresponding to one of the VNFs 716) into a shared VNF by a VNF sharing manager 802 (corresponding to the VNF sharing manager 700).

In 811, an OSS/BSS 803 (e.g. corresponding to OSS/BSS 713) requests an NFVO of a MANO architecture 804 (e.g. corresponding to MANO components 714) to create a VNF. Conventional procedures may be used for this.

In 812, the MANO 804 instantiates the VNF 801 (as requested) using conventional procedures.

In 813, an element manager 805 is attached to the VNF 801 using conventional procedures.

In 814, for each deployed VNF, the MANO 804 passes to the VNF sharing manager a VNF sharing profile or requests the VNF sharing manager 802 to create a VNF sharing profile if not provided.

In 815, for each deployed VNF, the VNF sharing manager 802 compiles a VNF sharing profile (depending on the resources used, the application to be shared like AMF, PCF, etc.) if not provided by MANO and derives sharing properties, e.g. which functions can be shared and the conditions under which functions can be shared.

It is assumed that in 816, an external management system 806 (e.g. corresponding to external management system 715, e.g. an OSS or NSSMF 712 etc., makes a request to use the VNF 801 (which is assumed to be sharable). The request may originate internally from MANO as well, due to a VNF LCM operation.

In 817, the MANO 804 informs the VNF sharing manager 802 about the request of 816 in order to check whether sharing is allowed or a new dedicated VNF needs to be created.

In 818 the VNF sharing manager 802 checks the VNF sharing profile and replies about VNF sharing capabilities and whether to share or not. It also enables a probe to set the VNF in "Shared" mode and updates VNF sharing status state machines.

In 819 the VNF sharing manager 802 informs the MANO 804 about enabling sharing. After sharing the VNF 801, the VNF configuration can be delegated to the VNF sharing manager 802 and VNF LCM is negotiated between the VNF sharing manager and MANO depending on the sharing profile.

In 820, the MANO 804 replies to the external management system 806 that it may use the (now shared) VNF 801. It also informs about the VNF sharing manager 802.

In 821, for VNF configuration, the interaction between the OSS 803 or the external OSS 806 and the VNF 801 can be made through the VNF sharing manager 802 depending on the sharing profile.

In 822, after sharing is enabled, a further EM 807 or directly the External OSS 806 can configure the VNF 801 through the VNF sharing manager 802. The VNF sharing manager 802 can interact with the rest of the generic OAM functions to configure specific VNF aspects (e.g., network parameters through the Network Configuration Manager).

A similar flow may be applied for transforming a shared VNF to a non-shared VNF

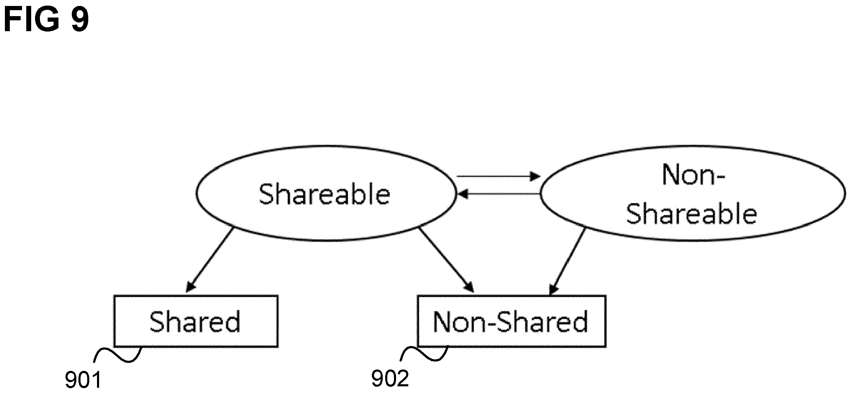

Figure 9 illustrates states of a VNF controlled by the VNF sharing manager.

If the VNF is shareable according to the sharing profile, it may be in a shared state 901 or in a non-shared state 902. If it is not shareable, it may only be in the non-shared state 902.

The VNF sharing manager may transform the VNF from being shareable to being non-shareable and vice versa.

Requests for a shared VNF may originate from an NSSMF but also from an OSS or external system and may be sent to MANO or to another system like SONAC (Service Oriented Network Auto Creation) or an O-RAN SMO (Open RAN - Service Management and Orchestration).

However, the VNF sharing manager 802 needs to know who is using the VNF 801 and how, since this affect also VNF LCM delegation and authorization. For 3GPP-based slice aware requests, this information is typically available because specific blueprints are used. However, for other management systems or tenants, there are typically no specific templates defined to use for a shared VNF 801.

Therefore, according to various embodiments, the VNF sharing manager 700 enables management and control of a shareable VNFs from 3GPP slice aware management systems and non 3GPP management systems (e.g. the external, slice unaware, management system, 715) using virtual network slices. This means that according to various embodiments, in order to use internally common procedures for slice-aware and slice unaware tenants, the latter are abstracted using Virtual Network Slices (VNS).

For each external tenant the VNF sharing manager 802 exposes a VNS API to the tenant. This API can be also exposed by MANO 804 on behalf of the VNF Sharing Manager 802.

Each tenant needs to reply with the VNS information requested by the VNF sharing manager 802.

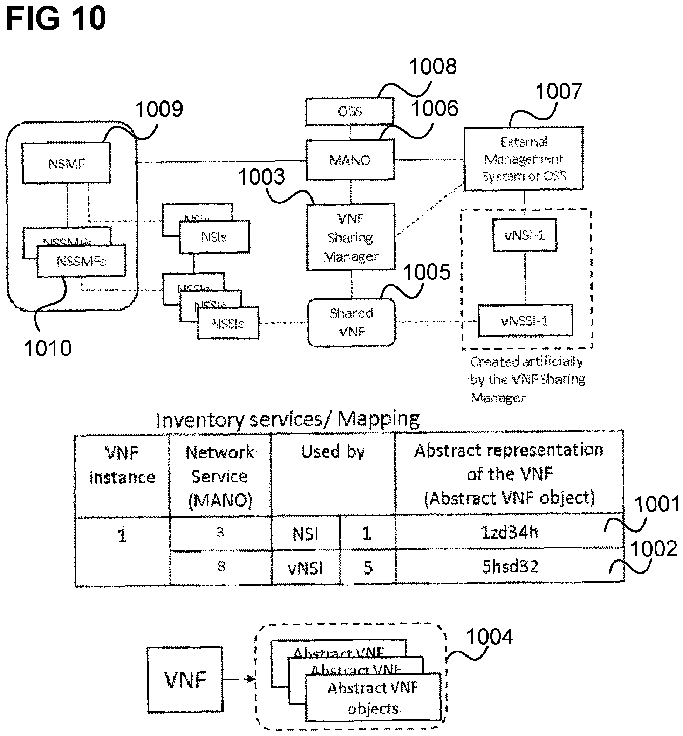

Figure 10 illustrates the use of virtual network slices.

For each network slice instance (NSI) or virtual NSI (vNSI) network slice an abstract representation 1001, 1002 of the VNF is maintained. The VNF sharing manager 1003 enables a specific view of the VNF per NSI or vNSI so these can manage a specific VNF object 1004.

Instances of VNSs and abstract VNF objects 1004 are identified using appropriate IDs.

The VNF sharing manager 1003 maintains inventory services with the mapping of shared VNF information per NSI-IDs and VNSI-IDs. It is responsible to guarantee isolation between different slices or virtual slices operations and to guarantee isolation between different VNF/VNFC instances. It knows who is using the VNF 1005 and how the user wants to use it (requirements).

VNF requirements passed by slice aware and slice unaware tenants are passed in a single format. In a simple "default" form the VNF sharing manager 1003 instantiates a VNS for a single VNF for a slice unaware tenant of the VNF. More complex relationships are also possible between a VNS and MANO 1006 (not only about considering "singleton" VNFs but also about and Network Services, VNFFGs, VNFCs etc). The VNF sharing manager 1003 exposes a VNS management interface to the tenant and exposes in a "northbound" interface virtual NSI LCM operations towards external management function 1007.

The northbound interface of the VNF sharing manager 1003 serves for interactions with OSS/BSS 1008, NFV-MANO 1006, NFVI, NSMF 1009, NSSMF 1010, tenant management systems 1007 etc.

The VNF sharing manager 1003 further includes a "southbound" interface for interactions with the 1005 VNF and a "west east" interface for interactions with other VNF generic OAM functions. The VNF sharing manager 1003 can interact with the VNF directly or through other VNF generic OAM functions (e.g., VNF configuration manager).

It should be noted that VNF generic OAM functions are also compatible with VNF configuration methods according to ETSI NFV. The VNF sharing manager 1003 can be realized and managed as a Common VNF or PaaS (platform as a service) Service according to ETSI NFV.

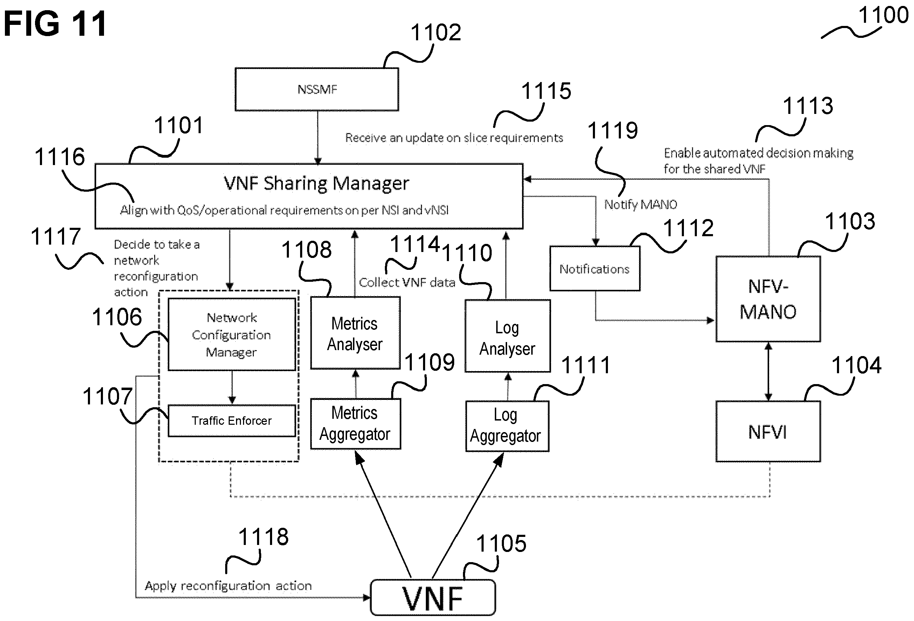

Figure 11 shows a flow diagram 1100 for VNF configuration.

Components as described with reference to figure 7 are involved in the flow: a VNF sharing manager 1101, an NSSMF 1102, an NFV-MANO 1103 an NFVI 1104, a VNF 1105, a network configuration manager 1106, a traffic enforcer 1107, a metrics aggregator 1109, a metrics analyzer 1108, a log aggregator 1111, a log analyser 1110 and a notification manager 1112.

The VNF sharing manager 1101 can autonomously decide on shared VNF operations after conflict solving between all NSIs and virtual NSIs (vNSIs) without considering interactions with NFV-MANO 1103. As an example, which is illustrated in figure 11 and described in the following, the VNF sharing manager 1101 performs VNF network reconfiguration by calling a traffic enforcer action by calling a VNF network configuration manager 1106 and traffic enforcer 1107 taking into account slicing and virtual slicing requirements from the users of the VNF

In 1113, automated decision making is enabled for the shared VNF 1105 (e.g., delegated by MANO 1103 to the VNF sharing manager 1101).

In 1114, the VNF sharing manager 1101 collects VNF data from the metrics analyzer 1108 and/or the log analyzer 1110. Metrics data and log data are collected from the Metrics aggregator 1109 and the log aggregator 1111 and are about VNF data, MANO data, NFVI data etc.

In 1115, the VNF sharing manager 1101 is assumed to receive an update on slice requirements from the NSSMF 1102 (directly or through interaction with NFV-MANO).

In 1116, the VNF sharing manager 1101 aligns with QoS and/or operational requirements for an NSI or an vNSI (indicated per NSI and/or vNSI, in this example by the NSSMF 1102).

In 1117, in reaction to 1116, the VNF sharing manager 1101 decides to take a network reconfiguration action and informs the VNF network configuration manager 1106 (and traffic enforcer 1107) accordingly.

In 1118, the reconfiguration action is applied (network configuration manager 1106 is calling the traffic enforcer 1107).

In 1119, the VNF sharing manager 1101 notifies the MANO 1103 about the reconfiguration.

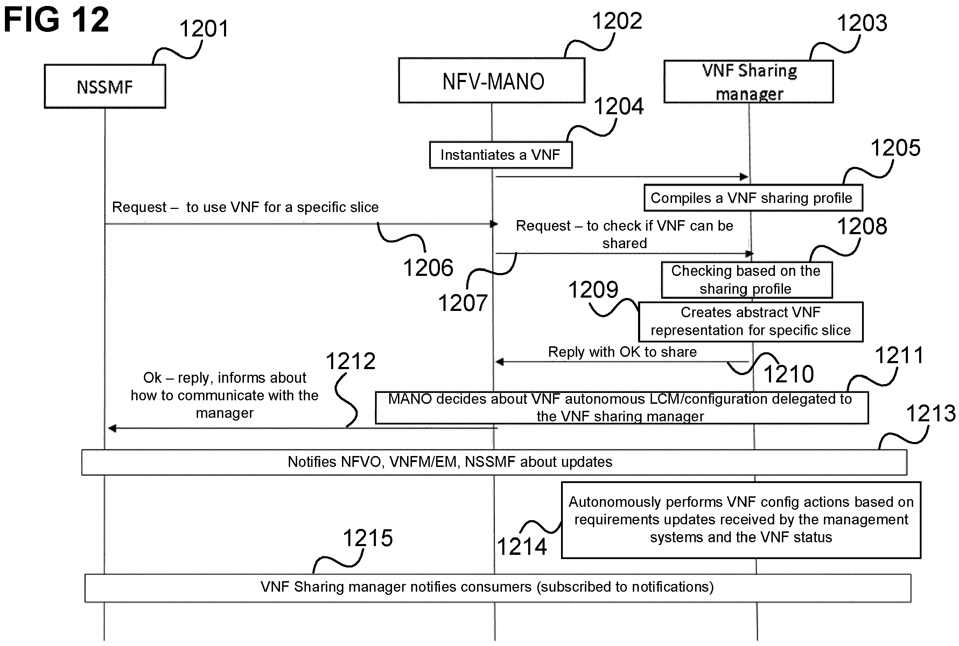

Figure 12 shows a flow diagram 1200 illustrating a workflow where an NSSMF 1201 requests a shareable VNF. A NFV-MANO 1202 and a VNF sharing manager 1203, as for example described with reference to figure 7, are also involved in the flow.

In 1204, the NFV-MANO 1202 instantiates a VNF using normal procedures 1204 and informs the VNF sharing manager 1203 about it.

In 1205, the VNF sharing manager 1203 compiles a VNF sharing profile for the VNF (if not provided by NFV-MANO).

In 1206, the NSSMF 1201 requests to use the VNF for a specific network slice.

In 1207, the NFV-MANO 1202 requests the VNF sharing manager 1203 to check whether the VNF can be shared.

In 1208, the VNF sharing manager 1203 performs the requested check based on the VNF sharing profile. It is assumed in this example that the VNF is shareable.

In 1209, the VNF sharing manager 1203 creates an abstract VNF representation allocated to the network slice.

In 1210, the VNF sharing manager 1203 informs the NFV-MANO 1202 that the VNF may be shared.

In 1211, the NFV-MANO decides about VNF autonomous LCM and/or configuration delegation to the VNF sharing manager 1203.

In 1212, the NFV-MANO 1202 acknowledges the NSSMF's request of 1206 and informs it how to communicate with the VNF sharing manager 1203.

In 1213, an involved NFV-MANO entity (e.g., NFVO, VNFM) and/or EM, and the NSSMF 1201 are informed about any updates that occur.

In 1214, the VNF sharing manager 1203 autonomously performs VNF configuration and/or management actions based on requirement updates received from a management system (e.g. NSSMF 1201) and the VNF and involved systems status (see the flow of figure 11).

In 1215, the VNF sharing manager 1203 notifies consumers (subscribed to notifications).

If, instead of from the NSSMF 1201 the request for using an VNF comes from a slice-unaware management system of a certain tenant, that management system requests usage of the VNF using a virtual network slice API. The flow is then similar but, before 1209, the VNF sharing manager compiles a virtual network slice representation for the tenant.

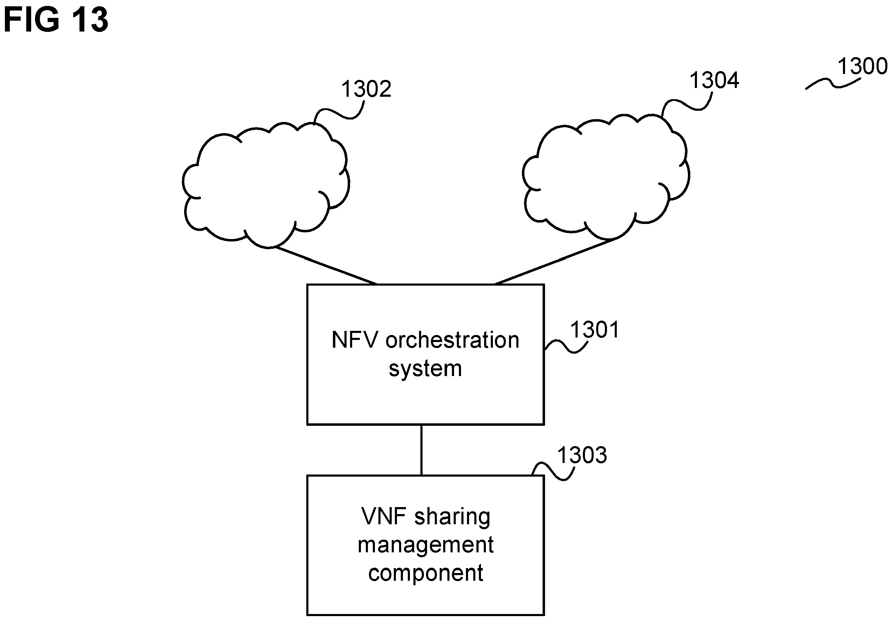

In summary, according to various embodiments, a communication system is provided as illustrated in figure 13.

Figure 13 shows a communication system 1300 according to an embodiment.

The communication system 1300 includes a network function virtualization orchestration system 1301 configured to provide a virtual network function for an application for a communication network 1302.

Further, the communication system 1300 includes a virtual network function sharing management component 1303 configured to establish a sharing profile of the virtual network function, wherein the sharing profile specifies whether the virtual network function may be shared with another communication network 1304.

The network function virtualization orchestration system 1301 is configured to, upon a request from the other communication network 1304 for provision of a virtual network function, fulfil the request from the other communication network 1304 by sharing the provided virtual network function with the other communication network 1304 if the sharing profile specifies that the virtual network function may be shared with the other communication network 1304.

According to various embodiments, in other words, sharing of virtual network functions is enabled wherein the capability of a virtual network function to be shared is stored in a sharing profile of the virtual network function.

According to various embodiments, support for both sharing options, i.e. sharing of a virtual network functions between network slices as well as between one or more network slices and a non-network slicing aware communication system (corresponding to the "other" communication network in figure 13), e.g. via NFV-MANO, is provided. In particular, mechanisms for handling multi-tenancy and network slicing for VNF operations in a uniform way are provided. According to various embodiments, rather than providing VNF sharing only in the context of network slicing, a generic way is provided to associate a VNF with multiple Network Services owned by different tenants, even if different NFV-MANO systems are used.

The approach of figure 13 can be applied in many use cases e.g. in industrial automation and in an O-RAN environment. For example, the virtual network function is a firewall between various networks (and is thus used and to be configured by multiple networks), e.g. a mobile communication network in a factory, an intranet of the factory and a local area network connecting robot devices of the factory.

The approach of figure 13 may be implemented using extensions over the VNF generic OAM functions framework. VNF generic OAM functions are easily usable in connection with the approach of figure 13 (e.g. the VNF sharing manager) without impact on the design and implementation of the VNF. The approach of figure 13 enables flexibility regarding the way VNF configuration and management can be further simplified and optimized. Various embodiments can be operated over multi-technology VNF environments (e.g. VM-based and/or container-based).

Various embodiments thus enhance telecom operator orchestration mechanisms with additional methods and/or mechanisms and interfaces which can enable shared VNF management in the light of network slicing but also beyond. They allow uniform management of virtual network slices managed uniformly by the network operator. This type of management can be exploited as a network service and be part of an integrated orchestration plane. Furthermore, additional network services can be designed using the VNF sharing manager.

Various embodiments allow management for VNF multi-tenancy without considering slicing and/or outside NFV-MANO. As mentioned above, the VNF sharing component may be included as part of the VNF generic OAM functions framework.

If the sharing profile specifies that the virtual network function may not be shared with the other communication network, the network function virtualization orchestration system 1301 fulfils the request from the other communication network in another way than by sharing the provided virtual network function with the other communication network. For example, the network function virtualization orchestration 1301 may fulfil the request by sharing another virtual network function or may create a virtual network function to fulfil the request from the other communication network.

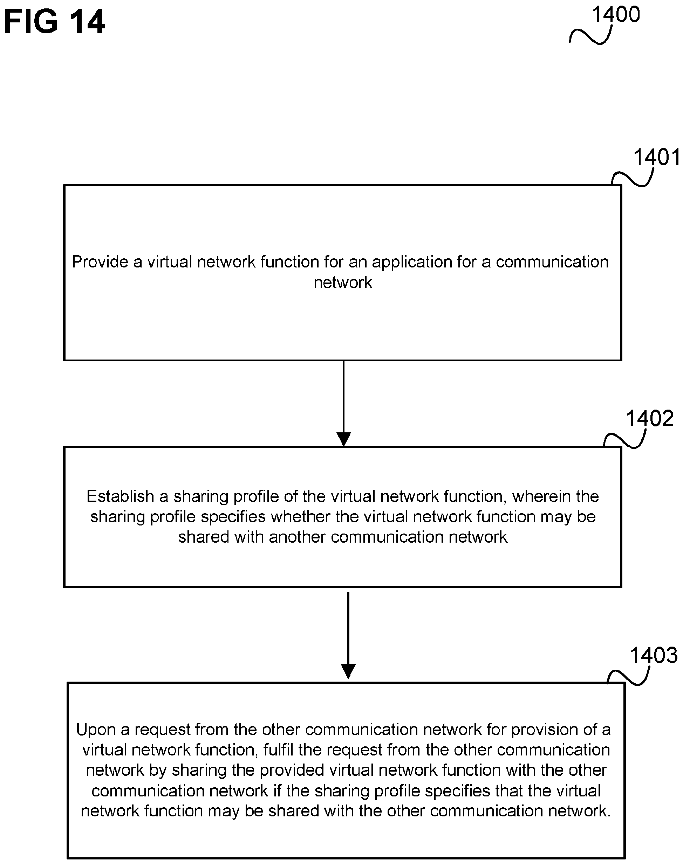

The communication system for example carries out a method as illustrated in figure 14.

Figure 14 shows a flow diagram 1400 illustrating a method for providing a virtual network function.

In 1401, a virtual network function for an application for a communication network is provided.

In 1402, a sharing profile of the virtual network function is established, wherein the sharing profile specifies whether the virtual network function may be shared with another communication network.

In 1403, upon a request from the other communication network for provision of a virtual network function, the request from the other communication network is fulfilled by sharing the provided virtual network function with the other communication network if the sharing profile specifies that the virtual network function may be shared with the other communication network.

For example, according to various embodiments, a method for optimizing deployment and operation of shared network services is provided, the method including:
- receiving a request from a management system
   ∘ for deploying or updating a network service with one or more shared VNFs
   ∘ creating virtual one or more network slice instances and mapping them to different tenants
   ∘ validating received input and conform against different tenant policies
- receiving information from shared VNFs (or VNF components) about:
   ∘ shared VNF status, shared VNF fault management information, shared VNF performance management information, shared VNF configuration information
- exposing and translating information per slice or virtual slice instance to one or more management systems or one or more other shared VNFs about
   ∘ shared VNF status, shared VNF fault management information, shared VNF performance management information, shared VNF configuration information
- automating shared VNF configuration and management operations
- preserving isolation between network slice instances and virtual network slice instances operating over a shared VNF

The components of the communication system may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication system comprising: a network function virtualization orchestration system configured to provide a virtual network function for an application for a communication network; and a virtual network function sharing management component configured to establish a sharing profile of the virtual network function, wherein the sharing profile specifies whether the virtual network function may be shared with another communication network; wherein the network function virtualization orchestration system is configured to, upon a request from the other communication network for provision of a virtual network function, fulfil the request by sharing the provided virtual network function with the other communication network if the sharing profile specifies that the virtual network function may be shared with the other communication network.

2. The communication system of claim 1, wherein the network function virtualization orchestration system is configured to receive the request from the other communication network and is configured to, upon reception of the request, request the virtual network function sharing management component to check whether the sharing profile specifies that the virtual network function may be shared with the other communication network.

3. The communication system of claim 1 or 2, wherein the communication system comprises a plurality of network slices and wherein the virtual network function sharing management component is configured to share the virtual network function between the communication network and the other communication network by treating the other communication network as a virtual network slice and sharing the virtual network function among the virtual network slice and one or more of the plurality of network slices.

4. The communication system of claim 3, wherein the virtual network function sharing management component is configured to maintain an abstract representation of the virtual network function for each network slice and virtual network slice between which the virtual network function is shared.

5. The communication system of any one of claims 1 to 4, wherein the network function virtualization orchestration system is configured to, if the sharing profile specifies that the virtual network function may be shared with the other communication network, delegate life cycle management and/or configuration management of the virtual network function to the virtual network function sharing management component.

6. The communication system of any one of claims 1 to 5, wherein the virtual network function sharing management component is configured to, if the sharing profile specifies that the virtual network function may be shared with the other communication network, configure the virtual network function according to the requirements for the usage of the virtual network function received from the communication network and from the other communication network.

7. The communication system of any one of claims 1 to 6, wherein the network function virtualization orchestration system is configured to create the virtual network function in response to a request for provision of a virtual network function from the communication network.

8. The communication system of any one of claims 1 to 7, wherein the sharing profile specifies whether virtual network function may be shared with any other communication network.

9. The communication system of any one of claims 1 to 8, wherein the request from the other communication network for provision of a virtual network function for the same application as for the communication network.

10. The communication system of any one of claims 1 to 9, wherein the application is a network function of a core network of a mobile communication network.

11. The communication system of any one of claims 1 to 10, wherein the virtual network function sharing management component is configured to manage the sharing status of the virtual network function by a state machine.

12. The communication system of any one of claims 1 to 11, wherein the virtual network function sharing management component is configured to transition between the virtual network function being shareable with the other communication network and the virtual network function not being shareable with the other communication network during operation of the virtual network function.

13. A method for providing a virtual network function comprising:
providing a virtual network function for an application for a communication network;
establishing a sharing profile of the virtual network function, wherein the sharing profile specifies whether the virtual network function may be shared with another communication network; and
upon a request from the other communication network for provision of a virtual network function, fulfilling the request from the other communication network by sharing the provided virtual network function with the other communication network if the sharing profile specifies that the virtual network function may be shared with the other communication network.

## Amended claims

### Amended claims in accordance with Rule 137(2) EPC.

1. A communication system (100, 1300) comprising: a network function virtualization orchestration system (604, 714, 804, 1006, 1103, 1202, 1301) configured to provide a virtual network function (606, 716, 801, 1005, 1105) for an application for a communication network (1302); and a virtual network function sharing management component (700, 802, 1003, 1101, 1203, 1303) configured to establish a sharing profile of the virtual network function (606, 716, 801, 1005, 1105), wherein the sharing profile specifies whether the virtual network function (606, 716, 801, 1005, 1105) may be shared with another communication network (1304); wherein the network function virtualization orchestration system (604, 714, 804, 1006, 1103, 1202, 1301) is configured to, upon a request from the other communication network (1304) for provision of a virtual network function (606, 716, 801, 1005, 1105), fulfil the request by sharing the provided virtual network function (606, 716, 801, 1005, 1105) with the other communication network (1304) if the sharing profile specifies that the virtual network function (606, 716, 801, 1005, 1105) may be shared with the other communication network (1304); and
wherein the communication system (100, 1300) comprises a plurality of network slices and wherein the virtual network function sharing management component (700, 802, 1003, 1101, 1203, 1303) is configured to share the virtual network function (606, 716, 801, 1005, 1105) between the communication network (1302) and the other communication network (1304) by treating the other communication network (1304) as a virtual network slice and sharing the virtual network function (606, 716, 801, 1005, 1105) among the virtual network slice and one or more of the plurality of network slices.

2. The communication system (100, 1300) of claim 1, wherein the network function virtualization orchestration system (604, 714, 804, 1006, 1103, 1202, 1301) is configured to receive the request from the other communication network (1304) and is configured to, upon reception of the request, request the virtual network function sharing management component (700, 802, 1003, 1101, 1203, 1303) to check whether the sharing profile specifies that the virtual network function (606, 716, 801, 1005, 1105) may be shared with the other communication network (1304).

3. The communication system (100, 1300) of claim 2, wherein the virtual network function sharing management component (700, 802, 1003, 1101, 1203, 1303) is configured to maintain an abstract representation of the virtual network function (606, 716, 801, 1005, 1105) for each network slice and virtual network slice between which the virtual network function (606, 716, 801, 1005, 1105) is shared.

4. The communication system (100, 1300) of any one of claims 1 to 3, wherein the network function virtualization orchestration system (604, 714, 804, 1006, 1103, 1202, 1301) is configured to, if the sharing profile specifies that the virtual network function (606, 716, 801, 1005, 1105) may be shared with the other communication network (1304), delegate life cycle management and/or configuration management of the virtual network function (606, 716, 801, 1005, 1105) to the virtual network function sharing management component (700, 802, 1003, 1101, 1203, 1303).

5. The communication system (100, 1300) of any one of claims 1 to 4, wherein the virtual network function sharing management component (700, 802, 1003, 1101, 1203, 1303) is configured to, if the sharing profile specifies that the virtual network function (606, 716, 801, 1005, 1105) may be shared with the other communication network (1304), configure the virtual network function (606, 716, 801, 1005, 1105) according to the requirements for the usage of the virtual network function (606, 716, 801, 1005, 1105) received from the communication network (1302) and from the other communication network (1304).

6. The communication system (100, 1300) of any one of claims 1 to 5, wherein the network function virtualization orchestration system (604, 714, 804, 1006, 1103, 1202, 1301) is configured to create the virtual network function (606, 716, 801, 1005, 1105) in response to a request for provision of a virtual network function (606, 716, 801, 1005, 1105) from the communication network (1302).

7. The communication system (100, 1300) of any one of claims 1 to 6, wherein the sharing profile specifies whether virtual network function (606, 716, 801, 1005, 1105) may be shared with any other communication network (1304).

8. The communication system (100, 1300) of any one of claims 1 to 7, wherein the request from the other communication network (1304) for provision of a virtual network function (606, 716, 801, 1005, 1105) for the same application as for the communication network (1302).

9. The communication system (100, 1300) of any one of claims 1 to 8, wherein the application is a network function of a core network of a mobile communication network (1302).

10. The communication system (100, 1300) of any one of claims 1 to 9, wherein the virtual network function sharing management component (700, 802, 1003, 1101, 1203, 1303) is configured to manage the sharing status of the virtual network function (606, 716, 801, 1005, 1105) by a state machine.

11. The communication system (100, 1300) of any one of claims 1 to 10, wherein the virtual network function sharing management component (700, 802, 1003, 1101, 1203, 1303) is configured to transition between the virtual network function (606, 716, 801, 1005, 1105) being shareable with the other communication network (1304) and the virtual network function (606, 716, 801, 1005, 1105) not being shareable with the other communication network (1304) during operation of the virtual network function (606, 716, 801, 1005, 1105).

12. A method for providing a virtual network function (606, 716, 801, 1005, 1105) comprising:
providing a virtual network function (606, 716, 801, 1005, 1105) for an application for a communication network (1302);
establishing a sharing profile of the virtual network function (606, 716, 801, 1005, 1105), wherein the sharing profile specifies whether the virtual network function (606, 716, 801, 1005, 1105) may be shared with another communication network (1304); and
upon a request from the other communication network (1304) for provision of a virtual network function (606, 716, 801, 1005, 1105), fulfilling the request from the other communication network (1304) by sharing the provided virtual network function (606, 716, 801, 1005, 1105) with the other communication network (1304) if the sharing profile specifies that the virtual network function (606, 716, 801, 1005, 1105) may be shared with the other communication network (1304) wherein the communication system (100, 1300) comprises a plurality of network slices and wherein the virtual network function (606, 716, 801, 1005, 1105) is shared between the communication network (1302) and the other communication network (1304) by treating the other communication network (1304) as a virtual network slice and sharing the virtual network function (606, 716, 801, 1005, 1105) among the virtual network slice and one or more of the plurality of network slices.
